# EUROPEAN PATENT APPLICATION

(11) **EP 4 585 473 A1**
(43) Date of publication of application: **16.07.2025**
(21) Application number: 24150894.4
(22) Date of filing: 09.01.2024
(51) Int. Cl.: B60R 21/201, B60R 21/213, B60R 21/232

(54) **AN INFLATABLE CURTAIN PROVIDED WITH A STRESS RELIEF ARRANGEMENT**

(71) Applicant: Autoliv Development AB, 447 83 Vårgårda (SE)
(72) Inventor: Glodzinski, Kamil, 55-220 Jelcz-Laskowice, Dolnoslaskie (PL); Zió kowski, Jan, 55-200 Olawa (PL); Luczkiewicz, Agnieszka, 55-200 Olawa (PL); Borowski, Damian, 55-200 Olawa (PL)
(74) Representative: AWA Sweden AB

(57) **Abstract**

An inflatable curtain to form part of a vehicle safety system is provided. The curtain comprises an inflatable airbag (200) comprising a longitudinally extending suspension end (201) having at least two suspension portions (203) and at least two attachment members (204) arranged in a respective suspension portion (203) to allow the inflatable curtain to be suspended to an inside of a vehicle. The inflatable curtain further comprises at least one protective sheet (300) extending across at least a portion of a wall portion of the inflatable airbag (200) adjacent the suspension end (201). The at least one protective sheet (300) is provided with a stress relief arrangement (303) in a vicinity of a respective attachment member (204), wherein the stress relief arrangement (303) comprises one or more of a slit or a cut-out (305) in the at least one protective sheet (300). Further, a use of an inflatable curtain in a vehicle is provided.

## Description

### Technical field

The present invention relates to an inflatable curtain provided with a stress relief arrangement, and the use of an inflatable curtain provided with a stress relief in a vehicle.

### Technical background

Inflatable curtains are today common safety devices in motorized vehicles. They operate by deploying into an inflatable body with a large surface extension in the event of a collision. The fabric material from which the inflatable body is formed is sensitive to sharp objects such as broken glass pieces which are typically present in the event the curtain is arranged adjacent a window. Hence, there is a risk of the inflatable body being perforated which reduces the reliability of the curtain. In order to mitigate this risk, a protective layer may be incorporated in the inflatable curtain. The protective layer is typically comprised of a more durable fabric which is arranged on an exterior surface of the inflatable curtain.

Inflatable curtains are typically packed in a rolled-up configuration and are also mounted in the vehicle in the rolled-up configuration by means of attachment members that are fixed to an edge portion of the curtain. As the curtain is inflated and deployed it will un-roll into a generally flat, hanging configuration. It has however been noted that rolling of inflatable curtains comprising protective layers is difficult due to different physical properties of the protective layer and the material making up the airbag as such. The different physical properties of the materials in the inflatable curtain will cause something that is best described as buckling or warping which causes a tendency of the resulting roll being skewed or twisted. The skewing/twisting will increase progressively during rolling. The skewing/twisting causes a misalignment of the attachment members. Misaligned attachment members cause an increased risk of errors during installation of the rolled-up curtain in a vehicle. In the worst-case scenario, it may even cause a malfunctioning functionality during inflation and deployment. There is hence a need to mitigate these risks.

### Summary

It is an object of the present invention to provide an inflatable curtain comprising a protective sheet which alleviates the risk of a malfunctioning inflatable curtains due to erroneous packing and/or installation.

The inflatable curtain should, when in a rolled-up condition, be a substantially straight roll, free of any skewing or twisting of the roll.

The inflatable curtain should, when in a rolled-up condition, have its attachment members oriented along a common, substantially straight line.

These and other objects will be apparent from the following summary, description and appended claims.

According to one aspect of the present invention, there is provided an inflatable curtain to form part of a vehicle safety system, the curtain comprising:
an inflatable airbag comprising a longitudinally extending suspension end having at least two suspension portions; at least two attachment members being arranged in a respective suspension portion to allow the inflatable curtain to be suspended to an inside of a vehicle; and at least one protective sheet extending across at least a portion of a wall portion of the inflatable airbag adjacent the suspension end; wherein
the at least one protective sheet is provided with a stress relief arrangement in a vicinity of a respective attachment member, wherein the stress relief arrangement comprises one or more of a slit or a cut-out in the at least one protective sheet.

Accordingly, an inflatable curtain comprising a protective sheet is provided wherein stresses arising from the rolling-up of the inflatable curtain, due to different physical properties of the protective sheet(s) and the airbag, are accommodated by a stress relief arrangement.

The protective sheet is provided to one side of the inflatable curtain. The inflatable curtain is, during rolling-up, rolled longitudinally from a lower end towards an opposing suspension end such that the side of the inflatable curtain provided with a protective sheet constitutes the outside of the resulting roll. The suspension end with its at least two suspension portions, as well as the protective sheet, will thereby form part of the outermost surface portion, and hence outermost lap of the resulting roll. The at least two attachment members that are arranged in a respective suspension portion will thereby be accessible to allow mounting of the roll in a vehicle.

The protective sheet is typically more rigid and/or thicker than the material making up the airbag as such. The protective sheet typically has a surface extension that is smaller than the surface extension of the airbag as such. Hence, the different areas along the longitudinal extension of the airbag will behave different during rolling-up. Another complicating factor is that an inflatable curtain typically comprises two or more discrete protective sheets. Also, the protective sheets may have a non-rectangular surface extension. The individual sheets may even have different surface extensions. The different physical properties will result in a buckling and warping effect as the inflatable curtain is rolled- up. This will be seen as a skewing/twisting of the curtain as it is rolled up. The skewing/twisting will increase progressively during rolling. The buckling and warping and hence the resulting skewing/twisting can be said to build up during rolling-up. This will have an impact on the positioning of the attachment members that are used to mount the rolled-up curtain in a vehicle.

The inventors have realized the surprising effect that by providing the protective sheet with a stress relief arrangement in a vicinity of a respective attachment member, where the stress relief arrangement comprises one or more of a slit or a cut-out in the at least one protective sheet, the skewing/twisting of the rolled-up inflatable curtain in the area of the attachment members can be compensated for. In the context of the invention, the term "slit" should be understood as a cut line where the cut is made without any material being removed. Correspondingly, the term *"cut-out"* should be understood as a cut that removes material. The cut-out may, as nonlimiting examples, have a rectangular, a circular or an oval shape.

The slit or cut-out forming the stress relief arrangement may be provided centrally of the protective sheet as seen along a virtual line extending in parallel with the longitudinal extension of a rolled-up curtain. In so, the stress relief arrangement divides the protective sheet into a virtual upper portion and a virtual lower portion. The virtual upper portion of the protective sheet is configured to be secured to an upper portion of the airbag, e.g., by sewing, welding or adhesive bonding. The virtual lower portion of the protective sheet may be secured to a lower end of the airbag, e.g., by sewing, welding or adhesive bonding.

By arranging a stress relief arrangement in the form of one or more of a slit or a cut-out in this area, it has been noted that the area of the suspension portion in which the at least two attachment members are arranged will be more flexible since a mutual displacement between the virtual upper and lower portions will be allowed. This in turn allows the outer most lap of the rolled-up curtain to better accommodate to diametrical irregularities that are progressively built up inside the roll due to the warping or buckling. It also means that skewing/twisting of the resulting rolled-up curtain and especially in the area of the attachment members can be avoided or at least substantially reduced.

The slit or cut-out may be arranged inside the outer boundaries of the at least one protective sheet. Thus, the slit or cut-out may be arranged in an area of the protective sheet that is laterally displaced from the outer edges of the protective sheet.

The slit or cut-out may be arranged symmetrically along a virtual centreline of the at least one protective sheet, where the virtual centreline extends transverse to the longitudinal extension of a rolled-up curtain.

Each stress relief arrangement may comprise one or more slits or cut-outs.

The inflatable curtain may comprise at least two protective sheets, where each protective sheet may comprise at least one stress relief arrangement in a vicinity of a respective attachment member, and where each stress relief arrangement may comprise one or more of a slit or a cut-out.

The at least two protective sheets may be seen as discrete reinforcements. In the event the inflatable curtain is an inflatable window curtain that in operation is configured to extend along the Y-direction (longitudinal extension) of the vehicle, one protective sheet may be arranged to extend in the area between the A and B pillars and one protective sheet may be arranged to extend in the area between the B and C pillars.

The stress relief arrangement may be arranged in a surface portion of a respective protective sheet that extends across a central surface portion of the inflatable airbag, said central surface portion being limited by a perimeter of the inflatable airbag. It is preferred that the stress relief arrangement is arranged with a distance from the perimeter of the inflatable airbag so that the stress relief arrangement is not lapped during the rolling of the inflatable curtain. The functionality of the stress relief arrangement as described previously would be impaired should it be lapped, i.e., become embedded in the roll. The skilled person understands that the distance depends on the full length of the curtain as seen in its un-rolled condition. This since the length of the curtain determines the diameter of the rolled-up curtain and hence the length of the outer most lap of the roll.

The stress relief arrangement may have an extension substantially in parallel with the longitudinally extending suspension end of the inflatable airbag. Accordingly, as seen in a condition when the inflatable airbag is in a rolled-up condition, the stress relief arrangement will have an extension substantially in parallel with the longitudinal centreline of the roll.

The stress relief arrangements in the vicinity of the respective attachment members may be arranged along a common substantially straight line as seen in a condition when the inflatable window curtain is in a rolled condition.

Each stress relief arrangement may comprise one or more slits or cut-outs.

The stress relief arrangements in the vicinity of the respective attachment members may be arranged along a longitudinal extension of the inflatable curtain as seen in a condition when the curtain is in a rolled-up condition.

The stress relief arrangements in the vicinity of the respective attachment members may be arranged mutually parallel off-set along a substantially straight line as seen in a condition when the inflatable window curtain is in a rolled condition. The individual stress relief arrangements, although offset, will be arranged along the longitudinal extension of the inflatable curtain.

According to another aspect, the invention refers to the use of an inflatable curtain according to any of claims 1-7 in a vehicle.

The inflatable curtain according to the invention, with its design and functionally, has been thoroughly discussed above. These arguments are equally applicable to the use of such inflatable curtain in a vehicle. Hence, reference is made to the above to avoid undue repetition.

The inflatable curtain may be an inflatable window curtain that in an inflated and deployed condition provides a frontal or lateral protection to occupants in the vehicle.

The inflatable curtain may be suspended in a rolled condition to the vehicle by using the at least two attachment members. The inflatable curtain may be suspended to the roof line of the vehicle.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses highly schematically the features and their relation for an inflatable curtain provided with one protective sheet.
Fig. 2A discloses the features of the stress relief arrangement in an embodiment where the stress relief arrangement is a slit.
Fig. 2B discloses an embodiment wherein the stress relief arrangement comprises a cut-out.
Fig. 3 discloses an inflatable curtain provided with two protective sheets.
Fig. 4 discloses highly schematically a portion of an inflatable curtain provided with one protective sheet when in a rolled-up condition.
Fig. 5A discloses highly schematically a portion of an inflatable curtain provided with two protective sheets when in a rolled-up condition.
Fig. 5B discloses an alternative embodiment a portion of an inflatable curtain provided with two protective sheets when in a rolled-up condition.

### Detailed description

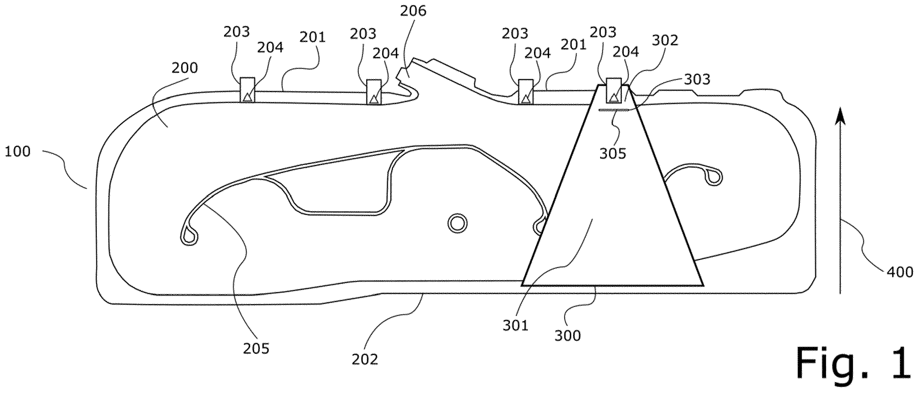

First turning to Fig. 1, the overall design of the inflatable curtain 100 to form part of a vehicle safety system is described. The inflatable curtain 100, which as such is well known in the art, comprises an inflatable airbag 200 having a longitudinally extending suspension end 201, and a lower end 202. The air bag is provided with at least two suspension portions 203 arranged along the suspension end 201. Each suspension portion 203 is provided with an attachment member 204 to allow the inflatable curtain 100 to be suspended to an inside wall portion or roof portion of a vehicle. The inflatable curtain is typically configured to be suspended to a roof line of the vehicle. The airbag 200 may be a sewn airbag, or a one-piece woven airbag (OPW). The airbag 200 is provided with shape defining means such as seams 205 and/or tethers (not shown). The airbag 200 is provided with a gas-inlet 206 which is configured to be fluidly connected to a gas generator (not shown). The inflatable curtain 100 further comprises a protective sheet 300 extending across at least a portion of a wall portion of the inflatable airbag 200 adjacent to the suspension end 201. The protective sheet 300 has a surface extension that is smaller than the surface extension of the airbag 200. In the present example, the protective sheet 300 is shown to have an overall triangular shape.

The skilled person realizes that the inflatable curtain 100 with its overall geometry, size and features described above may differ depending on the intended vehicle and intended position in the vehicle.

The inflatable curtain 100 according to the invention differs from prior art in that the protective sheet 300 is provided with a stress relief arrangement 303. The stress relief arrangement 303 is arranged in a vicinity of a respective attachment member 204. The stress relief arrangement 303 comprises one or more of a slit, or a cut-out 305 in the at least one protective sheet 300.

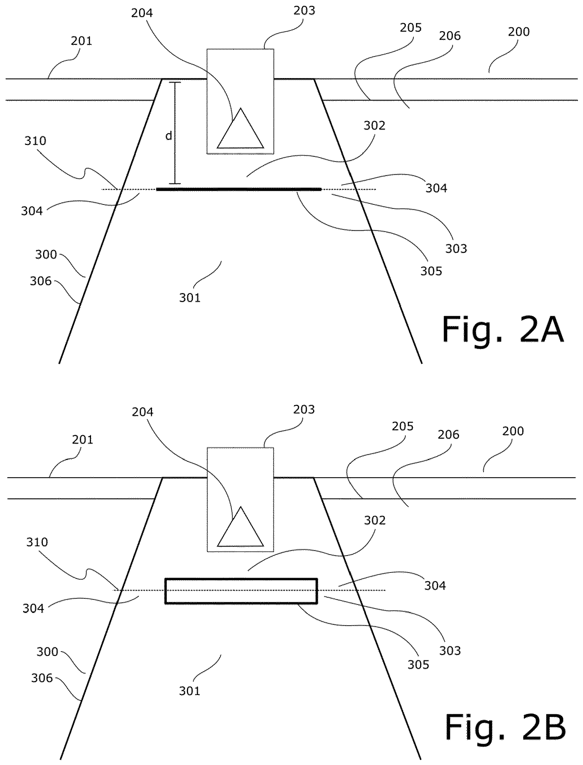

Next, the details of the stress relief arrangement 303 will be discussed starting with Fig. 2A. The stress relief arrangement 303 is arranged in a surface portion of the protective sheet 300 that extends across a central surface portion of the inflatable airbag 200. The central surface portion 206 is being limited by a perimeter 205 of the inflatable airbag 200. The stress relief arrangement 303 is arranged in a vicinity of the attachment member 304. The meaning of vicinity in this regard, means that the stress relief arrangement 303 is arranged within the distance d from the suspension end 201 of the airbag 200. The distance d is further defined by the circumference of the inflatable curtain 100 when in a rolled-up condition as will be discussed later.

The stress relief arrangement 303 is provided centrally of the protective sheet as seen along a virtual line 310 extending in parallel with the longitudinal extension of a rolled-up curtain.

The stress relief arrangement 303 has an extension substantially in parallel with the longitudinally extending suspension end 201 of the inflatable airbag 200. The slit or cut-out 305 comprising the stress relief arrangement 303, in the present example a slit, is arranged inside the outer boundaries 306 of the protective sheet 300. In other words, the slit or cut-out is arranged in an area of the protective sheet 300 that is laterally displaced from the outer edges of the protective sheet 300.

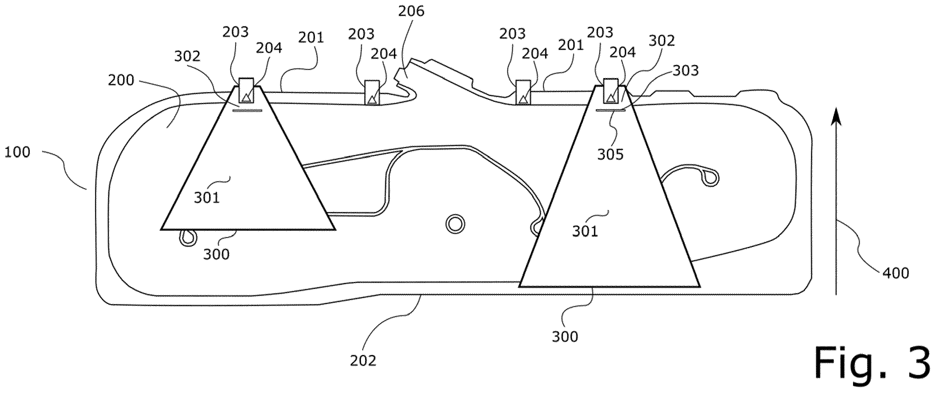

The stress relief arrangement 303 defines a virtual upper portion 302 and a virtual lower portion 301 of the protective sheet. The virtual upper portion 302 of the protective sheet 300 is secured to an upper portion of the airbag 200, e.g., by sewing, welding or adhesive bonding. The virtual lower portion 301 of the protective sheet 300 extends from the stress relief arrangement 303 towards the bottom end of the airbag 200. In some embodiments, as exemplified in Fig. 1, the virtual lower portion 301 of the protective sheet extends all the way to the bottom end 202 of the airbag 200. In other embodiments, as exemplified in Fig. 3, the virtual lower portion 301 of the protective sheet 303 extends only partly towards the bottom end 202 of the airbag 200.

Returning to Fig. 2A, the virtual upper 302 and lower 301 portions of the protective sheet 300 merge via the stress relief arrangement 303. The virtual upper 302 and the virtual lower 301 portions of the protective sheet 300 are merged via merging portions 304. The merging portions 304 are constituted by fabric material of the protective sheet 300 not cut by the slit or cut-out. The stress relief arrangement 300 is in Fig. 2A exemplified as a slit. The slit may be continuous or discontinuous. The skilled person realises that the slit may be a straight slit or a meander slit having an overall extension along a virtual line 310 extending in parallel with the longitudinal extension of a rolled-up curtain.

In figure 2B, an alternative embodiment of the stress relief arrangement 303 is shown wherein the stress relief arrangement 303 comprises a rectangular cut-out. The skilled person realizes that a cut-out may have any other shape having a similar extension, for example a circle or an oval.

Now turning to Fig. 3, an embodiment of the inflatable curtain 100 is shown comprising two protective sheets 300. Each protective sheet 300 comprises a stress relief arrangement 303 in a vicinity of a respective attachment member 204. The stress relief arrangements 303 are disclosed as slits. The skilled person realises that each protective sheet may comprise at least one stress relief arrangement 303. Also, each stress relief arrangement 303 may comprise one or more of a slit or a cut-out.

The skilled person realizes that more than two protective sheets 300 may be provided to the inflatable curtain 100. Fig. 3 exemplifies a non-limiting embodiment of the inflatable curtain 100 having two protective sheets 300 with different extensions. The skilled person realizes that the protective sheets 300 may have mutually different shapes and/or surface extensions as well as similar or identical shapes and/or surface extensions. The shapes and surface extensions are typically adapted to the intended position of the inflatable curtain in a vehicle.

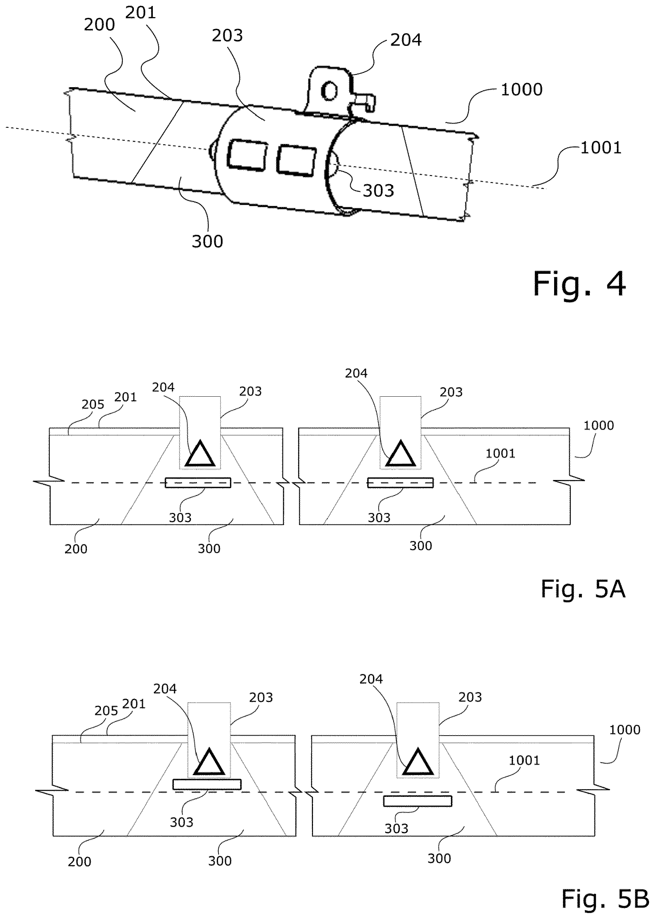

In the following, details of an inflatable curtain in its rolled condition will be discussed. In order for the inflatable curtain 100 to assume a rolled-up condition, the inflatable curtain is rolled longitudinally from the lower end 202 towards the opposing suspension end 201 as indicated by arrow 400 in Fig. 1 and Fig. 3. The roll 1000 resulting from the rolled-up inflatable curtain is shown in Fig 4. The suspension end 201 with its suspension portion 203 form part of the outermost surface portion of the resulting roll 1000. It is accordingly part of the outermost lap of the roll 1000.

The suspension portion 203 may in this condition be seen as a wrapper that contributes to maintaining the inflatable curtain 100 in its rolled-up condition until inflation. The suspension portion 203 is configured to burst upon inflation of the curtain and thereby allow the curtain to deploy. This is as such well known in the art.

The protective sheet 300 and the stress relief arrangement 303 provided thereto further constitutes a part of the outer most surface of the inflatable curtain of the resulting roll 1000. It is accordingly part of the outermost lap of the roll 1000. The stress relief arrangements 303 provided to the protective sheet 300 have an extension substantially in parallel with the longitudinal centreline 1001 of the rolled inflatable curtain 1000.

Fig. 5A and Fig. 5B each provide examples of inflatable curtains provided with two protective sheets 300 when in the rolled-up condition. The following details are applicable also for an inflatable curtain provided with three or more protective sheets 300. Fig. 5A shows an embodiment of the inflatable curtain in a rolled condition 1000 wherein the stress relief arrangements 303 in the vicinity of the respective attachment members 204 are arranged along a common line substantially in parallel with the substantially straight longitudinal centreline 1001 as seen in a condition when the inflatable window curtain is in a rolled condition 1000.

Fig 5B shows an embodiment of the inflatable curtain in a rolled condition 1000 wherein the stress relief arrangements 303 in the vicinity of the respective attachment members 204 are arranged along a longitudinal extension of the inflatable curtain as seen in a condition when the curtain is in a rolled condition 1000. As a difference to the embodiment of Fig. 5A, the individual stress relief arrangements 303 are disclosed as being mutually parallel offset. The individual stress relief arrangements, although offset, will be arranged along and substantially in parallel with the longitudinal extension of the inflatable curtain.

To sum up, the inventors have realized the surprising effect that by providing the protective sheet with a stress relief arrangement in a vicinity of a respective attachment member, where the stress relief arrangement comprises one or more of a slit or a cut-out in the at least one protective sheet, the skewing/twisting of the rolled-up inflatable curtain in the area of the brackets can compensated for. By arranging a stress relief arrangement in the form of one or more of a slit or a cut-out in the protective sheet in the area of the suspension portion in which the at least two attachment members are arranged, it has been noted that the suspension portion will be more flexible since a mutual displacement between the virtual upper and lower portions will be allowed. This in turn allows the outer most lap of the rolled-up curtain to better accommodate to diametrical irregularities that are progressively built up inside the roll during rolling due to the warping or buckling effects. It also means that skewing/twisting of the resulting rolled-up curtain and especially in the area of the brackets can be avoided, or at least substantially reduced.

Although the stress relief arrangements are disclosed as having the same geometries in both protective sheets, it is to be understood that the two or more protective sheets in one and the same curtain may have different geometries and extensions to thereby provide different abilities to better mitigate/accommodate different tendencies of warping and buckling and hence different tendencies of skewing or twisting along the resulting roll.

It is realized by a person skilled in the art that features from various embodiments disclosed herein may be combined with one another to provide further alternative embodiments.

## Claims

1. An inflatable curtain to form part of a vehicle safety system, the curtain comprising:
an inflatable airbag (200) comprising a longitudinally extending suspension end (201) having at least two suspension portions (203);
at least two attachment members (204) being arranged in a respective suspension portion (203) to allow the inflatable window curtain to be suspended to an inside of a vehicle; and
at least one protective sheet (300) extending across at least a portion of a wall portion of the inflatable airbag (200) adjacent the suspension end (201); wherein the at least one protective sheet (300) is provided with a stress relief arrangement (303) in a vicinity of a respective attachment member (204), wherein the stress relief arrangement (303) comprises one or more of a slit or a cut-out (305) in the at least one protective sheet (300).

2. The inflatable curtain according to claim 1, wherein the slit or cut-out (305) is arranged inside the outer boundaries (306) of the at least one protective sheet (300).

3. The inflatable curtain according to claim 1 or 2, comprising at least two protective sheets (300), each protective sheet comprising at least one stress relief arrangement (303) in a vicinity of a respective attachment member (204), and each stress relief arrangement (303) comprising one or more of a slit or a cut-out (305).

4. The inflatable curtain according to any of the preceding claims, wherein the stress relief arrangement (303) is arranged in a surface portion of a respective protective sheet (300) that extends across a central surface portion (206) of the inflatable airbag (200), said central surface portion being limited by a perimeter (205) of the inflatable airbag (200).

5. The inflatable curtain according to any of the preceding claims, wherein the stress relief arrangement (303) has an extension substantially in parallel with the longitudinally extending suspension end (201) of the inflatable airbag (200).

6. The inflatable curtain according to any of the preceding claims, wherein the stress relief arrangements (303) in the vicinity of the respective attachment members (204) are arranged along a common substantially straight line (1001) as seen in a condition when the inflatable window curtain is in a rolled condition (1000).

7. The inflatable curtain according to any of claims 1-6, wherein the stress relief arrangements (303) in the vicinity of the respective attachment members (204) are arranged mutually parallel off-set along a substantially straight line (1001) as seen in a condition when the inflatable window curtain is in a rolled condition (1000).

8. The inflatable curtain according to any of the preceding claims, wherein the stress relief arrangements (303) in the vicinity of the respective attachment members (204) are arranged along a longitudinal extension of the inflatable curtain when the curtain is in a rolled condition (1000).

9. Use of an inflatable curtain according to any of claims 1-8, in a vehicle.

10. The use according to claim 9, wherein the inflatable curtain is used as an inflatable window curtain.

11. The use according to claim 9 or 10, wherein the inflatable curtain is suspended in a rolled condition to the vehicle by using the at least two attachment members.
